## Europäisches Patentamt

## European Patent Office

## Office européen des brevets

(19)

(11) Numéro de publication: **0 220 134**
**B1**

(12) **FASCICULE DE BREVET EUROPEEN**

(45) Date de publication du fascicule du brevet: **03.10.90**

(51) Int. Cl.⁵: **B 23 B 31/30**

(21) Numéro de dépôt: **86810456.3**

(22) Date de dépôt: **16.10.86**

(54) Vérin hydraulique tournant.

(30) Priorité: **23.10.85 CH 4556/85**

(43) Date de publication de la demande:
**29.04.87 Bulletin 87/18**

(45) Mention de la délivrance du brevet:
**03.10.90 Bulletin 90/40**

(84) Etats contractants désignés:
**AT BE CH DE FR GB IT LI LU NL SE**

(56) Documents cités:
**EP-C-0 102 805**
**CH-A- 370 621**
**CH-A- 471 328**
**DE-A-2 151 742**
**DE-A-2 404 801**
**DE-A-2 417 887**
**DE-C- 733 869**
**FR-A-2 180 425**

(73) Titulaire: **ACED S.A.**
**rue Malvoisin 9**
**CH-2900 Porrentruy (CH)**

(72) L'inventeur a renoncé à sa désignation

(74) Mandataire: **Rochat, Daniel Jean et al**
**Bovard SA Ingénieurs-Conseils ACP**
**Optingenstrasse 16**
**CH-3000 Bern 25 (CH)**

## Description

L'invention concerne un verin hydraulique tournant selon le preambule de la revendication 1, voir DE—A—2404801.

La commande automatique des machines-outil modernes exige des moyens de manoeuvre plus souples et plus fiables que les moyens connus antérieurement pour assurer par exemple l'ouverture et la fermeture des pinces entraînant en rotation les pièces à usiner ou les barres de matière brute dans lesquelles les pièces sont formées. De plus, ces moyens de serrage doivent pouvoir développer des couples importants sous des vitesses de rotation très élevées.

On connaît déjà des dispositifs de commande de type hydraulique, mais l'on sait que la réalisation de ces dispositifs implique que l'on résolve correctement le problème consistant à transmettre la pression du fluide de commande depuis la partie fixe du circuit hydraulique jusqu'à la partie rotative. Or, les joints tournants utilisés jusqu'à maintenant ont tendance, lorsqu'ils doivent fonctionner à grande vitesse et transmettre des pressions élevées, à produire des échauffements inadmissibles, ce qui nuit à la fiabilité et à la durabilité des machines.

Ainsi par exemple l'exposé de brevet FR 2 180 425 propose pour la transmission de la pression depuis un raccord d'entrée de prévoir dans l'alésage de la partie fixe une gorge annulaire et en regard de cette gorge, dans la partie tournante, une forure par laquelle la pression de l'huile se transmet à une chambre qui communique avec le cylindre du vérin par un conduit normalement fermé par une soupape à bille. Pour que la pression se transmette il faut prévoir entre la partie tournante et la partie fixe un jeu qui fonctionne comme un labyrinthe et crée une chute de pression importante. Cette disposition ainsi que d'autres du même genre, notamment celle qui est décrite dans l'exposé de brevet US—3,933,061 et qui comporte, dans le joint tournant, un distributeur qui transmet la pression en permanence, produisent les inconvénients mentionnés plus haut.

Par le document DE—24 04 801 on connaît un vérin hydraulique tournant, pour la commande du serrage ou du desserrage d'une pince ou d'un mandrin d'une machine-outil, comprenant un piston solidaire d'un tirant de serrage, un cylindre de commande solidaire d'un corps de broche, et un circuit hydraulique de commande des déplacements du piston dans le cylindre, ce circuit comprenant lui-même une partie stationnaire portée par des organes fixes, une partie rotative portée par le corps de broche et des moyens de transfert disposés entre les dites parties de circuit et comportant un bloc de transfert porté par la partie fixe et des moyens de retenue du fluide de commande équipés de soupapes et portés par la partie rotative.

Le problème évoqué au début est résolu partiellement par cette construction, dans laquelle on a prévu des moyens de retenue du fluide de commande dans la partie rotative du circuit, qui sont des soupapes à billes et qui coopèrent avec des pistons auxiliaires assurant leur ouverture et, par décharge de la pression à l'aval, leur fermeture.

Toutefois cette construction n'évite pas le frottement, entre un bloc de transfert et la partie rotative du circuit, quand le cylindre est en pression.

Le document DE—24 17 887 révèle un vérin hydraulique tournant dans lequel la partie rotative du circuit de commande comporte des moyens de maintien en pression du fluide de commande. Cependant, la pression de commande est communiquée au cylindre à travers un espace cylindrique, donc un jeu radial, qui existe en permanence. Ce jeu se remplit d'huile et pour éviter l'échauffement dû au laminage on doit prévoir des moyens auxiliaires compliqués.

Le but de la présente invention est de créer un vérin hydraulique du genre mentionné plus haut, qui assure, sans complication constructive supplémentaire, un meilleur maintien de la pression dans la partie rotative du circuit de commande, et évite toute cause d'échauffement.

Dans ce but, le vérin selon l'invention est caractérisé en ce que la partie rotative du circuit de commande comporte aussi des moyens de maintien du fluide en pression communiquant directement avec le cylindre et comportant une pluralité de logements jouant le rôle d'accumulateurs, une pluralité de pistons auxiliaires coulissant dans les logements et des moyens élastiques agissant sur les pistons auxiliaires de manière à maintenir le fluide de commande en pression dans le cylindre et en ce quelle bloc de transfert est mobile alternativement entre une position active dans laquelle deux surfaces de transfert homologues appartenant respectivement au corps de broche et au bloc de transfert sont appuyées l'une contre l'autre, et une position inactive dans laquelle ces deux surfaces sont séparées, et est sollicité par au moins un ressort qui tend à l'écarter de la surface de transfert de la partie rotative du circuit, le circuit de commande étant agencé pour actionner momentanément le bloc de transfert au moment d'une commande de manière à relier le cylindre à la partie stationnaire du circuit pendant la commande.

On va décrire ci-après, à titre d'exemple, une forme d'exécution de l'objet de l'invention, en se référant au dessin annexé, dont:

la fig. 1 est une vue schématique montrant, le principe du fonctionnement du dispositif ainsi que ses éléments essentiels,

la fig. 2 est une vue en coupe plus détaillée d'une forme d'exécution du dispositif, et

la fig 3 est une vue en coupe partielle à échelle agrandie selon la ligne III—III de la fig. 2, montrant un des moyens de retenue du fluide montés dans la broche.

Le dispositif représenté au dessin est pourvu de moyens associés à la partie rotative du circuit et qui agissent pour maintenir la pression dans le cylindre une fois que la commande a été donnée, de sorte que le joint hydraulique ne doit plus nécessairement transmettre la pression en permanence comme dans les dispositifs connus. Cette performance est obtenue grâce à la présence d'un bloc de transfert comme on va le voir ci-après.

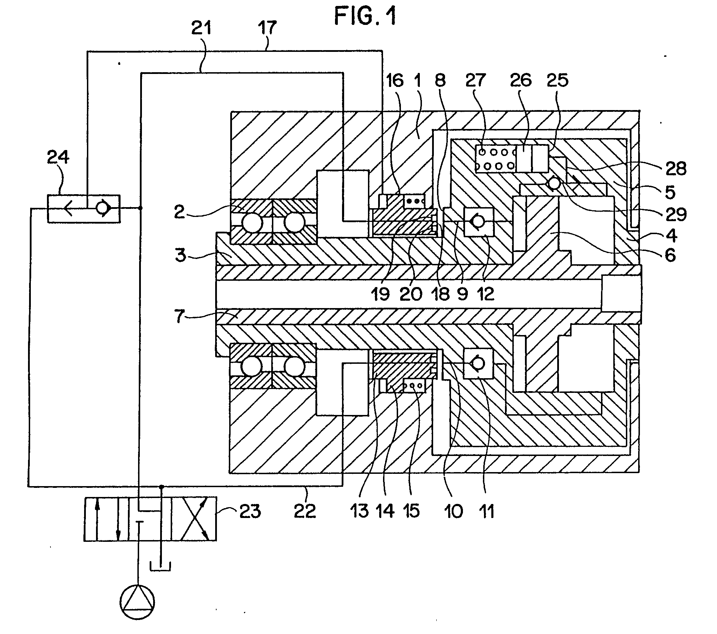

La fig. 1 représente schématiquement le principe du dispositif. Le bâti 1 représente par exemple la poupée d'un tour. Les paliers 2 supportent dans cette poupée un corps de broche 3 qui est entraîné en rotation par des moyens qu'il n'est pas nécessaire de représenter ici. A sa partie avant, le corps de broche 3 comporte une chambre 4 dont la paroi forme un cylindre 5 et dans laquelle coulisse un piston 6 solidaire du manchon de serrage 7. Ce manchon de serrage est lié par des moyens connus à une pince (non représentée) de telle manière que le déplacement du manchon 7 dans le sens axial entre la position avancée et la position reculée provoque l'ouverture et/ou la fermeture de la pince sur une pièce à usiner ou sur une barre, le cas échéant sur un porte-outil dans le cas où le dispositif décrit est utilisé pour assurer la commande d'un outil.

Le cylindre 5 présente sur son côté gauche une surface de transfert annulaire et plane 8 dans laquelle débouchent des orifices qui sont en communication avec des conduits 9 et 10 ménagés à l'intérieur du cylindre 5 et aboutissant sur chacun des deux côtés du piston 6. Des moyens de retenue 11 et 12 sont disposés à l'intérieur du cylindre 5 sur le chemin des conduits 10 et 9. Ces moyens de retenue sont symbolisés à la fig. 1 par de simples soupapes à billes, mais comme on verra plus loin, ces dispositifs sont conçus de façon à réagir au moment de la commande d'un mouvement pour ouvrir les conduits de décharge et les maintenir ouverts tout en ouvrant les conduits de charge uniquement dans la mesure nécessaire pour permettre le passage de l'huile sans perte de pression. De plus, les fonctions des deux dispositifs 11 et 12 s'inversent suivant le sens du déplacement du piston 6 qui doit être commandé.

Entre le bâti de poupée 1 et le corps de broche 3 est disposé un bloc de transfert 13 qui est constitué par une pièce annulaire coaxiale à la broche 3. Cette pièce comporte une nervure 14 jouant le rôle de piston, sollicitée par un ressort 15 et logée dans un évidement 16 qui peut être alimenté en huile sous pression à travers le bâti 1 par un conduit 17. Ce bloc de transfert 13 présente une face plane et annulaire 18 située en regard de la surface de transfert 8 et dans laquelle sont ménagées deux gorges annulaires 19 et 20 dont les rayons correspondent aux distances entre l'axe de rotation du dispositif et les ouvertures des conduits 9 et 10 dans la surface de transfert 8. Cette dernière est une surface rotative, tandis que la surface de transfert 18 est une surface stationnaire. Normalement, le ressort 15 maintient le bloc de transfert écarté de la surface de transfert 8. En revanche, lors d'une commande du déplacement du manchon de serrage 7, la pression d'huile s'exerçant à l'arrière du piston 14 vient appuyer la surface de transfert 18 contre la surface 8. Ainsi, les gorges 19 et 20 qui sont en communication avec deux conduits de commande 21 et 22, sont en communication l'une avec l'huile sous pression et l'autre avec la décharge. La vanne 23 assure la commande des opérations. Elle permet d'utiliser les conduits 21 et 22 alternativement en conduit de charge et de décharge, alors que le conduit 17 connecté au dispositif par le clapet 24 conduit à chaque mouvement de commande l'huile sous pression.

Ainsi donc la friction entre les surfaces 18 et 8 n'existe qu'au moment des opérations de commande. Toutefois, pour maintenir la chambre 4 sous pression, il est prévu à l'intérieur du cylindre 5 des moyens de maintien en pression. Ceux-ci sont symbolisés à la fig. 1 par une chambre cylindrique 25 dans laquelle coulisse un piston libre 26 soumis lui-même à l'action d'un ressort 27. L'extrémité de la chambre 25 opposée au ressort 27 est en communication par des conduits 28 et une soupape à billes 29 avec celle des deux extrémités de la chambre 4 dans laquelle pénètre l'huile sous pression. L'huile qui pénètre provoque donc d'une part le déplacement du piston 6 et d'autre part le refoulement du piston 26 contre l'action du ressort 27 dans la chambre 25. Le volume d'huile qui sera ainsi transféré va correspondre à la mise en charge du ressort 27, de sorte que ce dernier maintiendra ensuite le piston 6 sous pression malgré les fuites éventuelles qui pourraient se produire au cours du fonctionnement du dispositif. A ce propos, on voit qu'à chaque mouvement, les fuites d'huile sont automatiquement compensées, puisque la quantité d'huile introduite dans les cylindres 4 et 25 assure nécessairement la mise en charge du ressort 27 jusqu'à la valeur nécessaire.

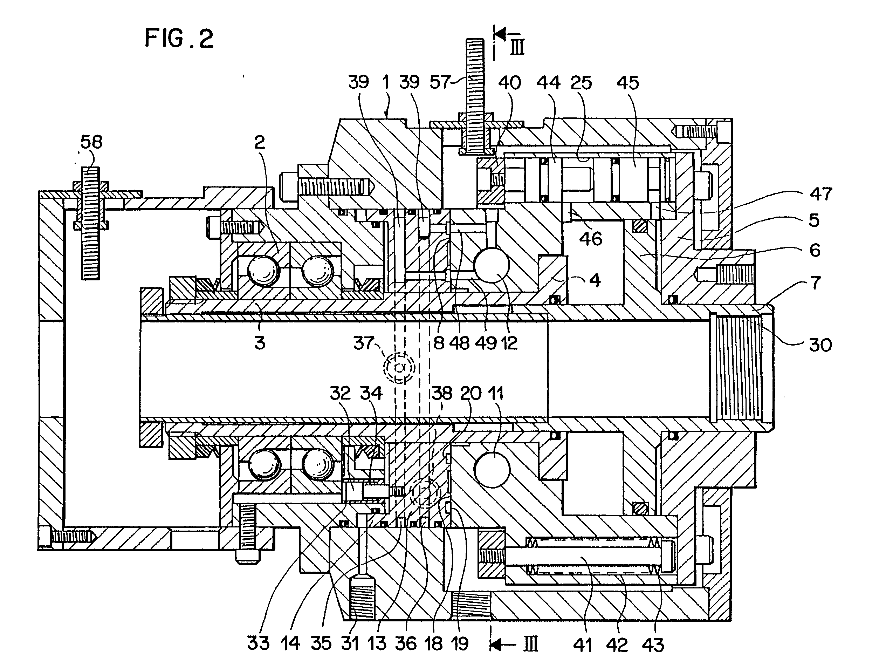

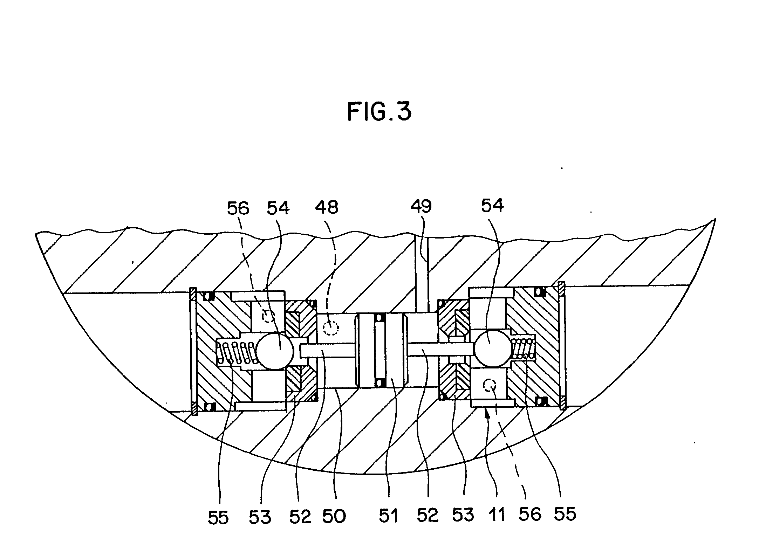

Les fig. 2 et 3 montrent plus en détail une forme d'exécution du dispositif dont le principe est représenté par la fig. 1. On reconnaît à cette figure le bâti 1, les paliers 2 le corps de broche 3 comportant ici plusieurs pièces qu'il n'est pas nécessaire de décrire un détail, la partie 5 du corps de broche constituant le cylindre de commande qui limite la chambre 4 dans laquelle coulisse le piston 6 solidaire du manchon de serrage 7. A l'avant de ce manchon de serrage on reconnaît le taraudage 30 permettant de lier à ce manchon un tirant susceptible d'actionner le cône de serrage de la pince. La surface de transfert 8 du cylindre 5 se trouve en regard de la surface de transfert stationnaire 18 du bloc de transfert 13 dont la nervure arrière 14 est engagée dans un logement susceptible d'être alimenté en huile sous pression par un raccord d'entrée 31 auquel sera connecté le conduit désigné par 17 à la fig. 1. Des vis 32 coulissant dans des douilles 33 et sollicitées par des ressorts 34 assurent ici la fonction du ressort 15 de la fig. 1 et maintiennent normalement le bloc de transfert 13 écarté du cylindre 5.

Pour l'alimentation du bloc de transfert on prévoit dans la surface cylindrique externe de ce dernier des gorges 35 et 36 qui communiquent lorsque le bloc de transfert est en position active, avec des conduits (non représentés) ménagés dans le bâti 1 et qui sont raccordés sur le pourtour du bâti 1 avec des tubulures de charge et de décharge 21 et 22. Les raccords en question sont visibles à la fig. 2 en 37 et 38. Quant aux gorges 19 et 20 ménagées dans la surface de transfert 18, elles communiquent par des forures 39 avec les gorges d'alimentation 35 et 36, et par conséquent avec les conduits 21 et 22.

En ce qui concerne les moyens de maintien de pression, ils comportent dans la forme d'exécution représentée à la fig. 2 un anneau de maintien 40 auquel sont fixées une série de tiges 41 engagées dans des logements 42 du cylindre 4, logements dans lesquels sont introduits des ressorts 43. Ainsi l'anneau 40 est constamment pressé contre une surface annulaire frontale du cylindre 5, surface dans laquelle débouchent des logements cylindriques qui correspondent aux logements 25 de la fig. 1. On comprend que les logements 25 et les logements 42 sont intercalés sur le pourtour du cylindre 5. Dans chacun des logements 25 sont introduits deux pistons 44 et 45 qui jouent le rôle du dispositif 29. En effet, l'espace compris entre les deux pistons 44 et 45 communique par une forure 46 avec l'extrémité arrière de la chambre 4, tandis que l'espace maintenu entre le piston 45 et le fond du logement 25 communique avec l'autre extrémité de la chambre 4 par une forure 47. Lorsque la pression d'huile parvient dans l'extrémité arrière de la chambre 4, elle se transmet donc dans le logement 25 entre les deux pistons 44 et 45, de sorte que seul le piston 44 est refoulé vers la gauche et arme les ressorts 43. Le piston 45 joue alors le rôle d'un obturateur par rapport au conduit 47. Bien entendu, l'extrémité droite de la chambre 4, c.à.d. la face avant du piston 6, est alors mise en communication par des moyens non représentés ici mais dont on parlera plus loin, avec la décharge de l'huile. On notera que l'anneau 40 peut effectuer une course vers l'arrière assez importante, de sorte que le volume d'huile qui peut être engagé entre les deux pistons 44 et 45 permet de compenser des fuites éventuelles au cours du fonctionnement du dispositif sans que la pression dans la chambre 4 ne baisse.

Lorsqu'un mouvement de droite à gauche du piston 6 est commandé, la pression d'huile est envoyée sur l'extrémité droite de la chambre 4, de sorte qu'elle s'exerce sur l'extrémité avant du piston 45. Les deux pistons sont alors repoussés vers la gauche contre l'action des ressorts 43. Pendant ce temps, bien entendu, la partie gauche de la chambre 4 est mise en communication avec la décharge, ce qui permet d'effectuer la course voulue.

Les deux dispositifs de retenue de fluide 11 et 12 sont montés dans deux forures parallèles ménagées à l'intérieur du cylindre 5. Ils sont en communication chacun d'une part avec les deux gorges 19 et 20 du bloc de transfert par des conduits 48 et 49 et d'autre part avec les deux extrémités de la chambre 4. La fig. 3 représente le dispositif de retenue 11. Dans la chambre centrale de ce dispositif, désignée par 50, coulisse un piston 51 pourvu de deux tiges 52. Le cylindre 50 est raccordé des deux côtés du piston 51 avec les conduits 48 et 49. Il est limité à ses deux extrémités par des sièges 53 contre lesquels sont pressées des billes 54 sollicitées par des ressorts 55, ces sièges étant logés dans des parties élargies de la forure transversale qui contient le dispositif. Comme on le voit, chacun des sièges 53 permet d'établir une communication entre l'un des deux conduits 48 ou 49 et l'une des deux chambres dans lesquelles se trouvent les billes 54. Dans chacune de ces chambres débouche d'autre part un conduit 56 qui relie le dispositif de retenue à l'une des deux extrémités de la chambre 4.

Le fonctionnement du dispositif est le suivant:

Si par exemple la pression d'huile est dirigée à partir de la vanne 23 sur le raccord 38, c'est la gorge 36 du bloc de transfert qui sera sous pression et par conséquent le conduit 48 du cylindre 5. Dans ce cas, le piston 51 du dispositif 12 sera déplacé vers la droite. La pression de l'huile soulevera la bille 54 située sur le côté gauche, de sorte que le conduit 56 correspondant recevra la pression de l'huile. D'autre part, l'autre bille 54 sera également séparée de son siège, mais par l'action de la tige 52. Le conduit 56 situé à gauche du dispositif 12 sera alimenté en huile sous pression tant que la pression subsistera, tandis que le conduit 56 situé à l'autre extrémité du dispositif 12 raccordé à l'autre extrémité de la chambre 4, sera connecté à la décharge de l'huile tant que le piston 51 maintiendra la bille 54 écartée de son siège. Si la pression d'huile arrive par le conduit 49 à l'intérieur de la chambre 50, alors les conduits seront commutés de façon inverse et le mouvement du piston se déroulera dans l'autre sens. Les deux dispositifs 11 et 12 fonctionnent en parallèle et la présence de deux dispositifs améliore la fiabilité et la sécurité du fonctionnement.

La commande des mouvements des organes décrits est réalisée par un circuit électronique connecté à la commande générale de la machine-outil. Ainsi, la vanne 23 qui commande l'arrivée de la pression d'huile sur le conduit 21 ou sur le conduit 22, l'autre conduit étant mis en décharge, est actionnée selon un programme prédéterminé. De plus, des détecteurs de position 57 et 58 contrôlent respectivement l'anneau 40 et le manchon 7. Ces détecteurs assurent l'arrêt de l'alimentation en huile sous pression au moment où les organes en question se trouvent dans leur position finale.

On réalise ainsi un dispositif très fiable, compact et dont le rendement hydraulique est extrêmement élevé. Ce dispositif permet de commander des manchons de serrage dans des broches tournant à des vitesses très élevées du fait que la transmission de la pression entre la partie fixe et la partie tournante ne s'effectue qu'au moment des opérations de commande. Les espaces intérieurs du corps de broche qui contiennent de l'huile sous pression sont en relation avec les moyens de maintien de pression agissant sous l'effet des ressorts 43. On évite ainsi aussi bien les pertes d'huile résultant des joints tournants peu étanches que l'échauffement inévitable jusqu'à maintenant si les joints étaient serrés.

Le dispositif de commande est autonome et peut être monté comme un auxiliaire de travail sur la poupée d'un tour, par exemple à l'arrière de celle-ci. Il peut aussi être intégré à la poupée.

**Revendications**

1. Vérin hydraulique tournant, pour la commande du serrage ou du desserrage d'une pince ou d'un mandrin d'une machine-outil, comprenant un piston (6) solidaire d'un tirant de serrage (7), un cylindre de commande (5) solidaire d'un corps de broche (3), et un circuit hydraulique (17, 21, 22) de commande des déplacements du piston dans le cylindre, ce circuit comprenant lui-même une partie stationnaire portée par des organes fixes (1), une partie rotative portée par le corps de broche (3) et des moyens de transfert (13, 14, 15) disposés entre les dites parties de circuit et comportant un bloc de transfert (13) porté par la partie fixe et des moyens de retenue du fluide de commande équipés de soupapes (11, 12) et portés par la partie rotative, caractérisé en ce que la partie rotative du circuit de commande comporte aussi des moyens de maintien du fluide en pression (25, 26, 27) communiquant directement avec le cylindre (5) et comportant une pluralité de logements (25) jouant le rôle d'accumulateurs, une pluralité de pistons auxiliaires (26; 44, 45) coulissant dans les logements et des moyens élastiques (27; 43) agissant sur les pistons auxiliaires de manière à maintenir le fluide de commande en pression dans le cylindre et en ce que le bloc de transfert est mobile alternativement entre une position active dans laquelle deux surfaces de transfert homologues (8, 18) appartenant respectivement au corps de broche (3) et au bloc de transfert (13) sont appuyées l'une contre l'autre, et une position inactive dans laquelle ces deux surfaces sont séparées, et est sollicité par au moins un ressort (15, 34) qui tend à l'écarter de la surface de transfert de la partie rotative du circuit, le circuit de commande étant agencé pour actionner momentanément le bloc de transfert au moment d'une commande de manière à relier le cylindre à la partie stationnaire du circuit pendant la commande.

2. Vérin selon la revendication 1, caractérisé en ce que le bloc de transfert (13) comprend des conduits internes (39) qui relient des ouvertures extérieures situées dans une surface latérale cylindrique du bloc de transfert à des ouvertures intérieures situées dans la surface de transfert (18) du bloc, les dites ouvertures extérieures (35, 36) étant en communication avec des raccords (37) portés par un organe fixe (1).

3. Vérin selon la revendication 2, caractérisé en ce que les dites ouvertures intérieures sont formées par des gorges annulaires (19, 20) entièrement situées dans la surface de transfert (18) du bloc, et en ce que la partie rotative du circuit comporte des conduits de commande (9, 10; 48, 49) qui débouchent dans la surface de transfert (8) de la partie rotative en regard des dites gorges, ces conduits étant reliés à chacune des deux extrémités de la chambre du cylindre et étant pourvus chacun d'un moyen de retenue (11, 12) du fluide de commande.

4. Vérin selon la revendication 3, caractérisé en ce que chaque moyen de retenue du fluide de commande constitue un dispositif à soupape comportant deux obturateurs (54) à ressort (55) placés dans des logements antagonistes et entre ces logements une chambre (50) dans laquelle coulisse un piston (51) de soupape ayant deux tiges opposées, le tout de manière que chaque obturateur (54) lorsqu'il est en position fermée maintienne le piston de soupape (51) dans une position telle que l'autre obturateur (54) se trouve nécessairement en position ouverte.

5. Vérin de commande selon la revendication 1, caractérisé en ce que les moyens de maintien en pression comportent un ensemble de logements cylindriques, orientés axialement et jouant le rôle d'accumulateurs, les pistons auxiliaires (44, 45) coulissant dans ces logements, un ensemble de ressorts (43) jouant le rôle des moyens élastiques, agissant parallèlement aux logement et intercalés entre ces derniers, et un anneau de liaison (40) sollicité par les ressorts (43) et par les pistons (44, 45), le tout de manière que, lorsque le cylindre de commande est mis en pression, les pistons auxiliaires (44, 45) déplacent l'anneau de liaison (40) de manière à armer les dits ressorts (43).

6. Vérin de commande selon la revendication 5, caractérisé en ce que la course du piston de commande (6) et celle de l'anneau de liaison (40) sont contrôlées par des détecteurs de position qui commandent automatiquement le déclenchement de l'alimentation en fluide du vérin.

7. Vérin de commande selon la revendication 1, caractérisé en ce que le bloc de transfert (13) est une pièce annulaire coaxiale à la broche et en ce que les surfaces de transfert (8, 18) sont des surfaces planes, le déplacement du bloc de transfert étant parallèle à l'axe de la broche.

8. Vérin selon la revendication 1, caractérisé en ce que les moyens de maintien en pression du fluide de commande sont incorporés au piston.

9. Vérin selon la revendication 1, caractérisé en ce que les moyens de maintien en pression (25, 26, 27) du fluide de commande sont incorporés au cylindre (5) de commande.

**Patentansprüche**

1. Drehender Hydraulikzylinder für die Steuerung des Anspannens oder Entspannens einer Spannzange oder eines Spannfutters einer Werkzeugmaschine, wobei ein einstückig mit einer Zugstange (7) verbundener Kolben (6) vorhanden ist, ein einstückig mit dem Spindelkörper (3) verbundener Steuerzylinder (5) und ein hydraulischer Kreis (7, 21, 22) zum Steuern der Verschiebungen des Kolbens in dem Zylinder, welcher Kreis selber einen von den feststehenden Teilen (1) getragenen stationären Abschnitt umfasst, einen von dem Spindelkörper (3) getragenen rotierenden Abschnitt und Uebertragungsmittel (13, 14, 15), welche zwischen den erwähnten Teilen des Kreises angeordnet sind und einen von dem feststehenden Abschnitt getragenen Uebertragungsblock (13) und Mittel zum Blockieren der Steuerflüssigkeit aufweisen, die ausgerüstet sind mit Ventilen (11, 12) und von dem rotierenden Teil getragen werden, dadurch gekennzeichnet, dass der rotierende Teil des Steuerkreises ausserdem Mittel zum Halten der Flüssigkeit (25, 26, 27) unter Druck umfasst, welche direkt mit dem Zylinder (5) in Verbindung stehen und eine Mehrzahl von Aushöhlungen (25) aufweisen, welche die Rolle von Speichern spielen, eine Mehrzahl von Hilfskolben (26; 44, 45), welche in den Einsenkungen geführt sind und elastische Mittel (27; 43), welche auf die Hilfskolben derart drücken, dass die Steuerflüssigkeit in dem Zylinder unter Druck gehalten wird und dass der Uebertragungsblock alternativ bewegbar ist zwischen einer aktiven Position, in welcher zwei gleichartige Uebertragungsflächen (8, 18), welche zum Spindelkörper (3) bzw. zum Uebertragungsblock (13) zugehörig sind, gegeneinandergedrückt werden, und einer inaktiven Position, in welcher diese beiden Oberflächen getrennt sind, und dass der Uebertragungsblock mittels wenigstens einer Feder (15, 34) belastet wird, welche dazu tendiert, diesen von der Uebertragungsfläche des rotierenden Teils des Kreises zu trennen, wobei der Steuerkreis dazu bestimmt ist, den Uebertragungsblock in dem Augenblick eines Kommandos momentan so zu betätigen, dass der Zylinder während des Kommandos mit dem stationären Teil des Kreises verbunden wird.

2. Zylinder nach Anspruch 1, dadurch gekennzeichnet, dass der Uebertragungsblock (13) interne Leitungen (39) umfasst, welche in einer zylindrischen Lateralfläche des Uebertragungsblockes vorgesehene äussere Oeffnungen mit in der Uebertragungsfläche (18) des Blockes vorgesehenen inneren Oeffnungen verbindet, wobei die erwähnten äusseren Oeffnungen (35, 36) mit Anschlüssen (37) in Verbindung stehen, welche auf einem feststehenden Organ (1) angebracht sind.

3. Zylinder nach Anspruch 2, dadurch gekennzeichnet, dass die erwähnten inneren Oeffnungen durch ringförmige Auskehlungen (19, 20) gebildet sind, welche vollständig in der Uebertragungsfläche (18) des Blockes vorgesehen sind, und dass der rotierende Teil des Kreises Steuerleitungen (9, 10; 48, 49) enthält, welche in der Uebertragungsfläche (8) des rotierenden Teils gegenüber der erwähnten Auskehlungen einmünden, wobei diese Leitungen mit jeder der zwei Aussenseiten der Zylinderkammer verbunden sind und jeweils mit einem Schliessmittel (11, 12) für die Steuerflüssigkeit versehen sind.

4. Zylinder nach Anspruch 3, dadurch gekennzeichnet, dass jedes der Schliessmittel für die Steuerflüssigkeit durch eine Ventilvorrichtung gebildet ist, welche zwei Verschlussvorrichtungen (54) mit Federn (55) enthält, die in gegenüberliegenden Aushöhlungen untergebracht sind, und eine Kammer (50) zwischen diesen Aushöhlungen, in welcher ein Ventilkolben (51) geführt ist, welcher zwei gegenüberliegende Stangen aufweist so dass jede Verschlussvorrichtung (54), sobald sie in geschlossener Position ist den Ventilkolben (51) in einer solchen Position hält, dass die andere Verschlussvorrichtung (54) sich zwangsläufig in geöffneter Position befindet.

5. Steuerzylinder nach Anspruch 1 dadurch gekennzeichnet, dass die Mittel zum Halten des Druckes einen Satz von zylindrischen Aushöhlungen auf-weisen, welche axial ausgerichtet sind und die Rolle von Speichern spielen wobei die Hilfskolben (44, 45) in diesen Aushöhlungen geführt sind ein Satz Federn (43) die Rolle von elastischen Mitteln spielt, welche parallel auf die Aushöhlungen wirken und zwischen den letzteren zwischengeschaltet sind und ein Verbindungsring (40) durch die Federn (43) und die Kolben (44 45) belastet derart ist, dass, wenn der Steuerzylinder unter Druck gesetzt wird, die Hilfskolben (44, 45) den Verbindungsring (40) so verschieben, dass die erwähnten Federn (43) gespannt werden.

6. Steuerzylinder nach Anspruch 5, dadurch gekennzeichnet, dass der Hub des Steuerkolbens (6) und der des Verbindungsringes (40) durch Lagedetektoren gesteuert werden, welche automatisch den Beginn der Flüssigkeitsversorgung des Zylinders steuern.

7. Steuerzylinder nach Anspruch 1, dadurch gekennzeichnet, dass der Uebertragungsblock (13) ein ringförmiges Teil, koaxial mit der Spindel ist und dass die Uebertragungsflächen (8, 18) ebene Flächen sind, wobei die Verschiebung des Uebertragungsblockes parallel zu der Achse der Spindel erfolgt.

8. Zylinder nach Anspruch 1, dadurch gekennzeichnet, dass die Mittel zum Halten des Druckes der Steuerflüssigkeit in dem Kolben untergebracht sind.

9. Zylinder nach Anspruch 1, dadurch gekennzeichnet, dass die Mittel zum Halten des Druckes der Steuerflüssigkeit in dem Steuerzylinder (5) untergebracht sind.

**Claims**

1. Rotary hydraulic actuator for controlling the gripping or loosening of a collet or a mandrel of a machine tool, comprising a piston (6) integral with a pull rod (7), a control cylinder (5) integral with a spindle body (3), and a hydraulic circuit (17, 21, 22) of control of the displacements of the piston in the cylinder, the circuit comprising a stationary part supported by fixed elements (1), a rotating part supported by the spindle body (3) and transmission means (13, 14, 15) disposed between the said parts of the circuit and comprising a transmission block (13) supported by the fixed part and the means of retention of control fluid equipped with valves (11, 12) and supported by the rotating part characterized in that the rotating part of the control circuit also comprises means of maintaining control fluid under pressure (25, 26, 27) connected directly to the cylinder (5) and comprising a plurality of bodies (25) playing the role of accumulators, a plurality of auxiliary pistons (26; 44, 45) sliding in the bodies and spring means (27, 43) acting on the auxiliary pistons so as to maintain the control fluid under pressure in the cylinder and in that the transmission block is movable alternately between an active position in which two homologous transmission surfaces (8, 18) belonging respectively to the spindle body (3) and to the transmission block (13) are pressed one against the other, and an inactive position in which the two surfaces are separated, and is loaded by at least one spring (15, 34) which stretches to withdraw from the transmission surface of the rotating part of the circuit, the control circuit being arranged to activate momentarily the transmission block at the moment of command so as to connect the cylinder to the stationary part of the circuit during the command.

2. Actuator according to claim 1 characterized in that the transmission block (13) comprises internal ducts (39) which connect the exterior openings situated in a lateral cylindrical surface of the transmission block to the interior openings situated in the transmission surface (18) of the block, the said exterior openings (35, 36) being linked with the connections (37) supported by a fixed element (1).

3. Actuator according to claim 2, characterized in that the said interior openings are formed by annular grooves (19, 20) situated entirely in the transmission surface (18) of the block and in that the rotating part of the circuit comprises control ducts (9, 10; 48, 49) which open into the transmission surface of the rotating part facing said grooves, said ducts being connected to each of two ends of the cylinder chamber and each being provided with a means for retaining (11, 12) the control fluid.

4. Actuator according to claim 3, characterized in that each means of retention of the control fluid constitutes a valve means comprising two springloaded (55) obturator plugs (54) placed in opposing valve bodies, and between said bodies a chamber (50) in which slides a valve piston (51) having two opposing rods, such that each obturator plug, when it is in a closed position, maintains the valve piston (51) in such a position that the other obturator plug (54) is necessarily in an open position.

5. Actuator according to claim 1, characterized in that the means for maintaining fluid under pressure comprise a series of cylindrical casings axially orientated and playing the role of accumulators, the auxiliary pistons (44, 45) sliding in the casings, a series of springs (43) playing the role of elastic means, acting in parallel with the casings and interposed between said casings, and a connecting ring (40) loaded by the springs (43) and by the pistons (44, 45), such that, when the control cylinder is put under pressure, the auxiliary pistons (44, 45) displace the connecting ring (40) so as to stress the said springs (43).

6. Actuator according to claim 5, characterized in that the stroke of the piston (6) and that of the connecting ring (40) are monitored by position detectors which automatically control the triggering of the supply of control fluid of the actuator.

7. Actuator according to claim 1, characterized in that the transmission block (13) is an annular piece coaxial with the spindle and in that the transmission surfaces (8, 18) are flat surfaces, the displacement of the transmission block being parallel to the axis of the spindle.

8. Actuator according to claim 1, characterized in that the means for maintaining the control fluid under pressure are incorporated into the piston.

9. Actuator according to claim 1, characterized in that the means for maintaining the control fluid under pressure (25, 26, 27) are incorporated into the control cylinder (5).

FIG. 1

EP 0 220 134 B1

EP 0 220 134 B1

FIG.2

2

FIG.3

56  54    48        49      54

55  53  52  50    51  52  53  11  56  55